# EUROPEAN PATENT APPLICATION

(11) **EP 2 390 720 A2**
(43) Date of publication of application: **30.11.2011**
(21) Application number: 11250569.8
(22) Date of filing: 27.05.2011
(51) Int. Cl.: G03B 17/02, H04N 5/225, G02B 13/00

(54) **Camera module**

(30) Priority: 27.05.2010 KR 20100049672; 08.02.2011 KR 20110011210
(71) Applicant: Samsung Electro-Mechanics Co., Ltd, Suwon Gyunggi-do 443-743 (KR)
(72) Inventor: Kim, Dae-Wook, Gyeonggi-do, 442-070 (KR); Jung, Woong-Tae, Gyeonggi-do, 445-789 (KR); Seok, Jin-Su, Suwon-si, 443-374 (KR)
(74) Representative: Mounteney, Simon James

(57) **Abstract**

A camera module is disclosed. The camera module in accordance with an embodiment of the present invention includes a lens, an actuator that moves the lens in a direction of optical axis, and an image sensor that converts an image incident through the lens to an electrical signal and has extended depth of field.

## Description

### CROSS-REFERENCE TO RELATED APPLICATIONS

This application claims the benefit of Korean Patent Application Nos. 10-2010-0049672 and 10-2011-0011210, filed with the Korean Intellectual Property Office on May 27, 2010 and February 8, 2011, respectively, the disclosure of which is incorporated herein by reference in their entirety.

### BACKGROUND

### 1. Technical Field

The present invention is related to a cameral module.

### 2. Background Art

With the recent technological advancement, mobile devices, such as laptop computers and mobile phones, and electronic devices, such as television, are used for multi-convergence. One of the main drives that lead to the multi-convergence is a camera module.

For easy operation by users, the camera module is equipped with an auto focusing function, with which focus is automatically made by an installed electronic device in order to prevent the focus of an object from being blurry when the lens is pointed to the object.

Auto focusing is a function that finds an optimal image focusing spot with position information of the lens and image information of an image sensor and then positions the lens to the spot. For auto focusing, the camera module can have an actuator and a position sensor, and the actuator can compute the position by use of the position sensor.

For instance, the actuator auto focuses by setting the distance between the lens and the object to be between 100mm and 1000mm (generally referred to as infinity).

However, as the object approaches the camera closer than 100mm, the point spread function (PSF) becomes severely deteriorated, and the focus is not properly made, thereby photographing a blurry image of the object.

In case the distance between the object and the lens becomes shorter than 100mm, it becomes inevitable that the camera module is protruded out of the electronic device or the size of the electronic device is increased. Therefore, a camera module that can take a close-up picture at a distance that is closer than 100mm is required.

### SUMMARY

The present invention provides a camera module that does not have an auto focusing operation outside a range between 100mm and 1000mm and can take a close-up picture at a distance that is closer than 100mm.

An aspect of the present invention features a camera module that can include: a lens unit including a lens and a barrel supporting the lens; an actuator configured to move the lens unit in a direction of optical axis; and an image sensor configured to convert an image incident through the lens unit to an electrical signal and have an extended depth of field.

The actuator can auto focus a photographed target object at a distance of 100mm to 1000mm.

The camera module can also include a printed circuit board that is packaged with the image sensor.

The actuator can include: a piezoelectric actuator, of which one end is in contact with one side of the barrel; and a preloading part configured to press the other end of the piezoelectric actuator. The piezoelectric actuator can repeat deformation in which expanding and contracting are combined with bending so as to elevate the barrel.

A first output protrusion can be formed on one surface of the piezoelectric actuator that faces the barrel, and the piezoelectric actuator can be extended in a direction that is perpendicular to a direction of optical axis of the lens unit.

A friction part, which is arranged in the direction of optical axis, can be formed on one side of the barrel, and a plurality of second output protrusions, which are coupled perpendicularly to the direction of optical axis, can be formed on one surface of the piezoelectric actuator.

The camera module can also include a bearing part that is arranged to face the piezoelectric actuator and movably supports the barrel in the direction of optical axis. The bearing part can include: a maintaining part; and a supporting ball that is rotatably coupled to the maintaining part and movably supports the barrel.

A traveling groove, which is formed in the direction of optical axis so that the supporting ball can travel, can be formed on an outer circumferential surface of the barrel.

The actuator can include: a coil part being wound on an outer circumferential surface of the barrel; a magnet part facing the coil part; and an elastic supporting part configured to elastically support the barrel in the direction of optical axis of the lens unit.

The elastic supporting part can include: a leaf spring part configured to support an upper side of the barrel; and a film spring part configured to support a lower side of the barrel. The leaf spring part can include: a first frame being coupled to the upper side of the barrel; a plurality of symmetrical elastic plates spirally extended to an outside of the first frame about the barrel; and a second frame being coupled to the plurality of elastic plates.

### BRIEF DESCRIPTION OF THE DRAWINGS

FIG. 1 shows a camera module in accordance with a first embodiment of the present invention.
FIG. 2 is a graph showing the amount of movement of an object and a lens.
FIGS. 3 and 4 illustrate a piezoelectric actuator of a camera module in accordance with a second embodiment of the present invention.
FIG. 5 is an exploded perspective view of the piezoelectric actuator of the camera module in accordance with the second embodiment of the present invention.
FIGS. 6 and 7 illustrate an elastic mode of the piezoelectric actuator of the camera module in accordance with the second embodiment of the present invention.
FIG. 8 illustrates a bending mode of the piezoelectric actuator of the camera module in accordance with the second embodiment of the present invention.
FIG. 9 illustrates a combination mode, in which the bending and elastic modes are combined, of the piezoelectric actuator of the camera module in accordance with the second embodiment of the present invention.
FIG. 10 is a perspective view of the camera module in accordance with the second embodiment of the present invention.
FIG. 11 is an exploded perspective view of the camera module in accordance with the second embodiment of the present invention.
FIG. 12 is a top view of the camera module in accordance with the second embodiment of the present invention.
FIG. 13 is a perspective view illustrating a piezoelectric actuator of a camera module in accordance with a third embodiment of the present invention.
FIG. 14 illustrates an elastic mode of the piezoelectric actuator of the camera module in accordance with the third embodiment of the present invention.
FIG. 15 is a bending mode of the piezoelectric actuator of the camera module in accordance with the third embodiment of the present invention.
FIG. 16 is a top view of the camera module in accordance with the third embodiment of the present invention.
FIG 17 illustrates operation of the camera module in accordance with the third embodiment of the present invention.
FIG. 18 is a perspective view of a camera module in accordance with a fourth embodiment of the present invention.
FIG. 19 is an exploded perspective view of the camera module in accordance with the fourth embodiment of the present invention.
FIG. 20 is a top view of a leaf spring part of the camera module in accordance with the fourth embodiment of the present invention.

### DETAILED DESCRIPTION

Since there can be a variety of permutations and embodiments of the present invention, certain embodiments will be illustrated and described with reference to the accompanying drawings. This, however, is by no means to restrict the present invention to certain embodiments, and shall be construed as including all permutations, equivalents and substitutes covered by the ideas and scope of the present invention. Throughout the description of the present invention, when describing a certain technology is determined to evade the point of the present invention, the pertinent detailed description will be omitted.

Terms such as "first" and "second" can be used in describing various elements, but the above elements shall not be restricted to the above terms. The above terms are used only to distinguish one element from the other.

The terms used in the description are intended to describe certain embodiments only, and shall by no means restrict the present invention. Unless clearly used otherwise, expressions in a singular form include a meaning of a plural form. In the present description, an expression such as "comprising" or "including" is intended to designate a characteristic, a number, a step, an operation, an element, a part or combinations thereof, and shall not be construed to preclude any presence or possibility of one or more other characteristics, numbers, steps, operations, elements, parts or combinations thereof.

Hereinafter, some embodiments of a camera module in accordance with the present invention will be described in detail with reference to the accompanying drawings. Identical or corresponding elements will be given the same reference numerals, regardless of the figure number, and any redundant description of the identical or corresponding elements will not be repeated.

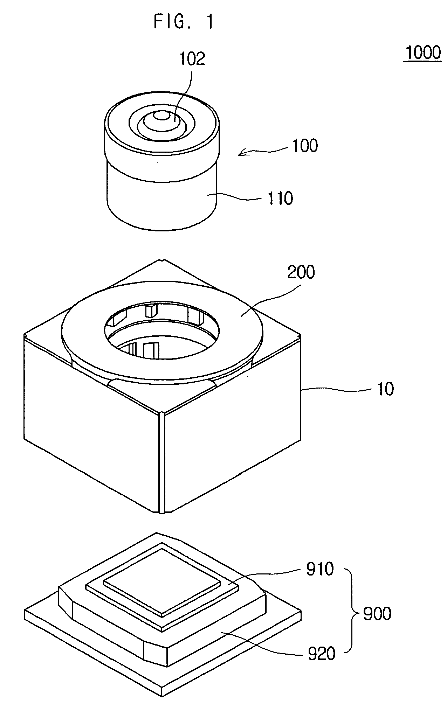

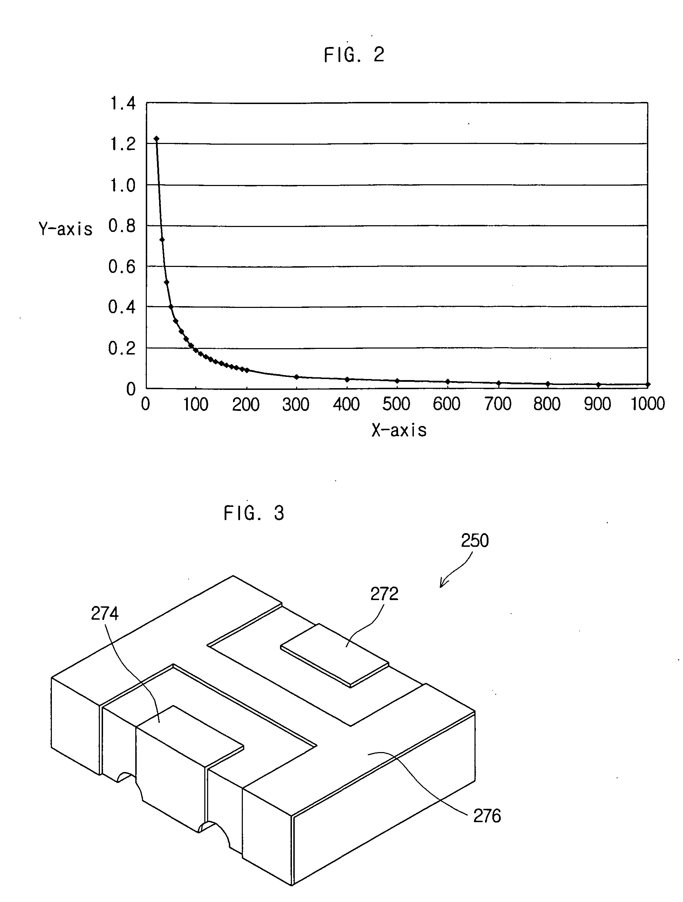

FIG. 1 illustrates a camera module 1000 in accordance with a first embodiment of the present invention, and FIG. 2 is a graph showing the amount of movement of an object and a lens. As illustrated in FIG. 1 and FIG. 2, the camera module 1000 includes a lens unit 100, an actuator 200 and a board 900, which includes an image sensor 910 and a printed circuit board 920.

For the convenience of description, the present embodiment describes a camera module 1000 that is installed in a mobile device such as a mobile communication terminal. However, the camera module 1000 in accordance with the present embodiment can have a wide variety of applications, for example, a television.

The lens unit 100 includes a lens 102 and a barrel 110, which supports the lens 102. The lens 102 receives a photographed image and makes the image incident upon the image sensor 910. There is no restriction in the shape and number of lens 102.

The lens 102 can be arranged in plurality, and the plurality of lenses can have a same focal point. The lens 102 can be coupled to an inner side of the barrel 110, which can function to hold the lens 102.

The actuator 200 can be arranged on an outer side of the barrel 110 for auto focusing, and the housing 10 can be arranged on an outer side of the actuator 200 so as to protect the lens unit 100 and the actuator 200. In other words, the actuator 200 can be coupled to an inner side of the housing 10, and the lens 102 and the barrel 110 can be movably arranged in the direction of optical axis inside the actuator 200.

The actuator 200 can move the lens in the direction of optical axis for auto focusing. Auto focusing is a function that finds an optimal position for focusing an image with position information of the lens 102 and image information of the image sensor 910 and places the lens 102 to the position.

FIG. 2 illustrates experiment values using the 54SV1 lens manufactured by Samsung Electro-mechanics Co., Ltd. Here, the X-axis indicates the distance between the camera module 1000 and a photographed target object ("object" hereinafter), and the Y-axis indicates the displacement of the lens 102.

Here, the unit of displacement is millimeters (mm). Referring to the graph shown in FIG 2, when the distance between the camera module 1000 and the object is 100mm to 1000mm, there is relatively little displacement of the lens 102 compared to macro-photography of closer than 100mm.

However, when the distance between the camera module 1000 and the object becomes closer than 100mm, the displacement of the lens 102 becomes radically large, and it becomes necessary that the lens 102 approaches the object very closely. For this, the conventional camera module protrudes the lens to bring the object into focus.

However, to maintain the mobile device small, the actuator 200 of the present embodiment can auto focus within the range between, for example, 100mm and 1000mm of the distance between the camera module 1000 and the object.

This can be realized by applying a lens and an actuator implemented in a camera module for a conventional mobile device to the present embodiment. As such, since there is no auto focusing operation outside the range of 100mm to 1000mm, the lens 102 is prevented from being unnecessarily protruded, and thus the mobile device can be maintained in its small size because there is no deformation of the mobile device.

The image sensor 910 can be coupled to a lower part of the housing 10. The image sensor 910 has an extended depth of field to sense an image incident through the lens 102 and convert the image to an electrical signal.

Here, the image sensor 910 having an extended depth of field does not form the focus at one point and enhances an image clarity of the object that is located closer than the point at which the focus is formed.

For this, when an object closer than 100mm is photographed, the focus is formed at 100mm, and the object closer than 100mm is photographed to be clear by the extended depth of field. The image sensor 910 can be a structure in which a plurality of pixels are integrated.

Each pixel is a kind of photodetector that can convert the incident image to an electrical signal and to data. Specifically, the image that is incident through the lens 102 is converted to electrical data by the image sensor 910, and the converted data is can be processed by an image processing unit (not shown), which will be described later.

Such image sensor 910 does not form the focus at one point but elongates the length of focus, and thus the image clarity for macro photography of closer than 100mm can be enhanced for the same lens 102.

The image sensor 910 does not require the lens 102 to approach the object excessively for macro photography and thus can minimize the auto focusing of the lens 102. By decreasing the distance by which the lens 102 approaches the object, the space required for the lens 102 to protrude toward the object is reduced, thereby making it unnecessary to enlarge the mobile device. Accordingly, it becomes possible to make the camera module 1000 small and enhance the clarity of the image that is macro photographed at a closer distance than 100mm.

The image sensor 910 can be packaged with the printed circuit board 920. The packaging can be made by the COF (Chip On Film) packaging method, which is a flip-chip method, the COB (Chip On Board) packaging method, which is a wire-bonding method, and the CSP (Chip Scale Package) method.

The printed circuit board 920 can have the image processing unit formed on a lower part thereof. The image processing unit can store, edit, send, restore and delete the image converted to an electrical signal through the image sensor 910.

By using the camera module 1000 of the present embodiment, the actuator 200 can allow the lens 102 to perform auto focusing to photograph an object that is distanced by 100mm to 1000mm from the camera module 1000 with clarity, and the image sensor 910 allows an object that is distanced by less than 100mm from the camera module 1000 to be photographed with clarity.

Accordingly, there is no need to approach the lens 102 to closer than 100mm of the object, and thus the lens 102 does not need to be unnecessarily protruded. Therefore, the size of the camera module 1000 is not changed, enabling the mobile device to be small and enhancing the clarity of an image photographed at a closer distance than 100mm.

Hereinafter, how the image sensor having extended depth of field is applied to various types of camera modules having the auto focusing structure.

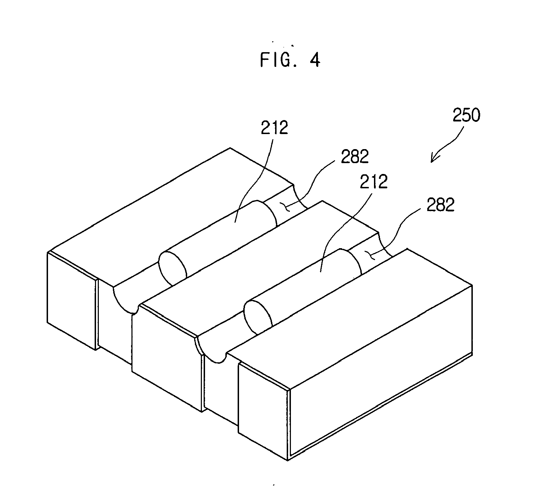

FIGS. 3 and 4 illustrate a piezoelectric actuator 250 of a camera module in accordance with a second embodiment of the present invention. As illustrated in FIGS. 3 and 4, the piezoelectric actuator 250 has the shape of a plate, one surface (an upper surface of the piezoelectric actuator 250 in its thickness direction) of the piezoelectric actuator 250 has a first external electrode 272, a second external electrode 274 and a ground external electrode 276 formed thereon.

The first external electrode 272 and the second external electrode 274 are formed on one surface and either side of the piezoelectric actuator 250, and the ground external electrode 276 is formed on one surface and lateral sides of the piezoelectric actuator 250 in such a way that the ground external electrode 276 crosses in between the first external electrode 272 and the second external electrode 274.

As illustrated in FIG. 4, the other surface of the piezoelectric actuator 250 can be formed with, for example, two grooves 282, in each of which an output protrusion can be coupled. The output protrusion 212 can be made of a material that has good abrasion resistance and a high friction coefficient, for example, ceramic, aluminum, hard metal, etc.

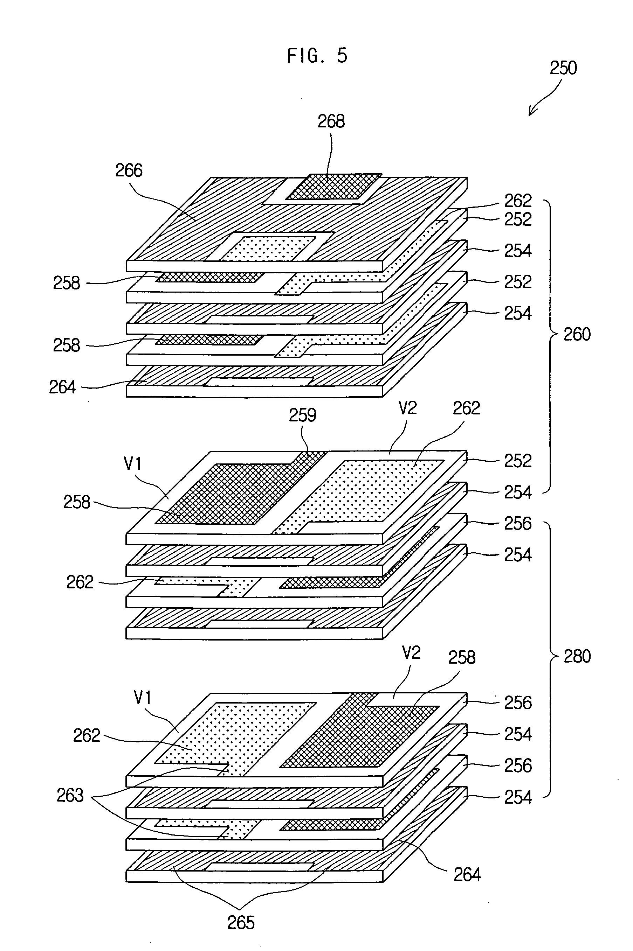

FIG 5 is an exploded perspective view of the piezoelectric actuator 250 of the camera module in accordance with the second embodiment of the present invention. As illustrated in FIG. 5, the actuator 250 includes a first ceramic sheet 252, on one surface of which a first internal electrode 258 and a second internal electrode 262 are pattern-printed in such a way that the first internal electrode 258 and the second internal electrode 262 are separated by a predetermine distance, and a second ceramic sheet 254, on one surface of which a ground electrode 264 is pattern-printed. The first ceramic sheet 252 and the second ceramic sheet 254 are alternately stacked over each other to form a cuboidal structure.

The piezoelectric actuator 250 has a first vibrating part V1 and a second vibrating part V2 that are separated by a predetermined distance by the first internal electrode 258 and the second internal electrode 262. The first internal electrode 258 and the second internal electrode 262 are selectively arranged for the first vibrating part V1 and the second vibrating part V2, respectively.

The piezoelectric actuator 250 includes a first piezoelectric body 260 and a second piezoelectric body 280 that is stacked below the first piezoelectric body 280. In the first piezoelectric body 260, as illustrated in FIG. 5, the first internal electrodes 258, which are pattern-printed on a plurality of the stacked first ceramic sheets 252, are piled one on another at a location corresponding to the first vibrating part V1.

The second internal electrodes 262 are arranged to be piled one on another at a location corresponding to the second vibrating part V2. In between the plurality of first ceramic sheets 252, the second ceramic sheet 254, on one surface of which the ground electrode 264 is pattern-printed, is stacked.

On the contrary, in the second piezoelectric body 280, the first internal electrodes 258 that are pattern-printed on a plurality of other stacked first ceramic sheets 252 are piled one on another at a location corresponding to the second vibrating part V2, and the second internal electrodes 262 are piled one on another at a location corresponding to the first vibrating part V1.

In between the plurality of first ceramic sheets 252, the second ceramic sheet 254, on one surface of which the ground electrode 264 is pattern-printed, is stacked.

An electrode part includes the first external electrode 272, the second external electrode and the ground external electrode 276. The first external electrode 272 is an electrode member that is formed on an outer circumferential surface on one side of the piezoelectric actuator 250 so as to be connected with a terminal 259 of the first internal electrode 258, and the second external electrode 274 is an electrode member that is formed on an outer circumferential surface on the other side of the piezoelectric actuator 250 so as to be connected with a terminal 263 of the second internal electrode 262.

The ground external electrode 276 is an electrode member that is formed on an outer circumferential surface of the piezoelectric actuator 250 so as to be connected with a terminal 265 of the ground electrode 264. The terminals 259, 263, 265 that are respectively extended from the first internal electrode 258, the second internal electrode 262 and the ground electrode 264 are extended up to an external side edges of the first and second ceramic sheets 252, 254 to be electrically connected with the first external electrode 272, the second external electrode 274 and the external ground electrode 276, respectively, which are arranged on the outer circumferential surface of the piezoelectric actuator 250.

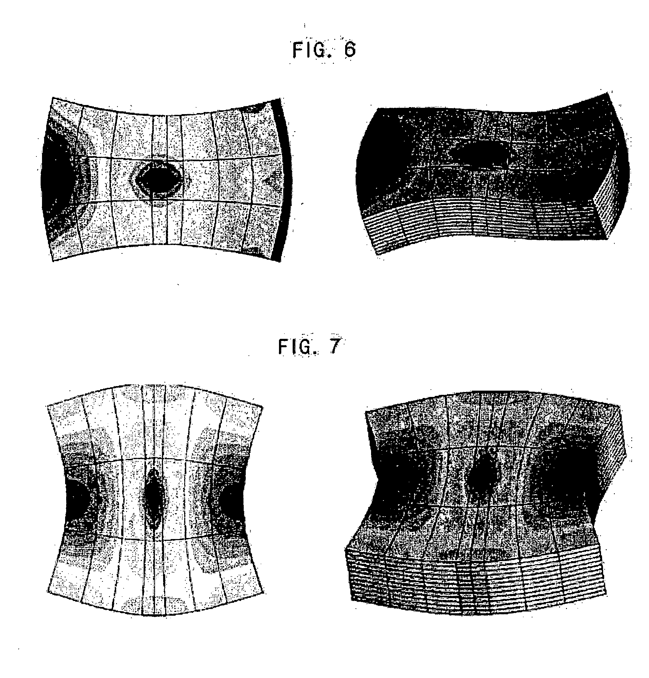

FIGS. 6 and 7 illustrate an elastic mode of the piezoelectric actuator 250 of the camera module in accordance with the second embodiment of the present invention. As illustrated in FIGS. 6 and 7, the piezoelectric actuator 250 can be actuated to be expanded and contracted in a direction the piezoelectric actuator 250 is extended.

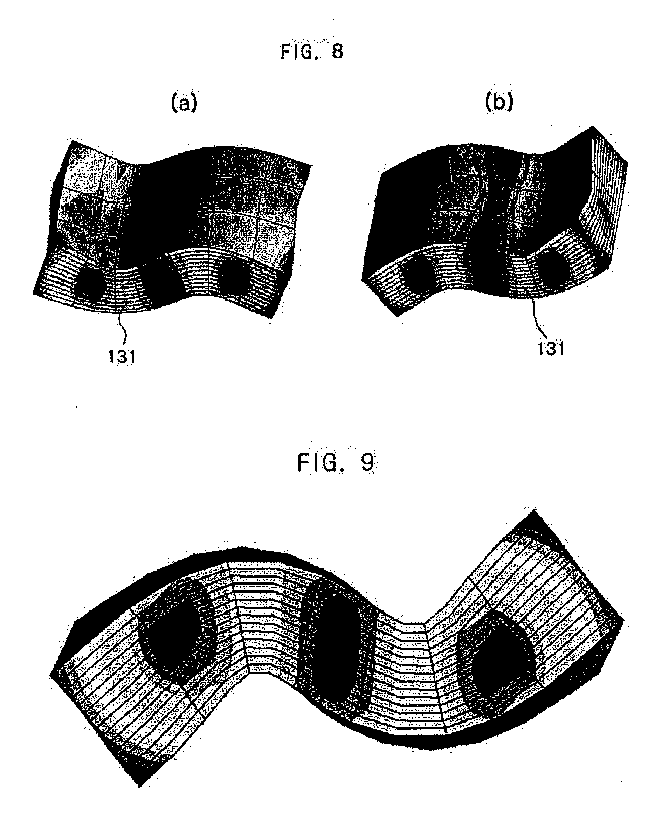

FIG. 8 illustrates a bending mode of the piezoelectric actuator 250 of the camera module in accordance with the second embodiment of the present invention. As illustrated in FIG. 8, the piezoelectric actuator 250 can be actuated to be bent in a direction of the thickness of the piezoelectric actuator 250.

FIG 9 illustrates a combination mode, in which the bending and elastic modes are combined, of the piezoelectric actuator 250 of the camera module in accordance with the second embodiment of the present invention. As illustrated in FIG. 9, once piezoelectric actuator 250 is actuated, the above described expanding, contracting and bending are repeated in a combined manner.

Accordingly, the two output protrusions 212 that are coupled to one surface of the piezoelectric actuator 250 can repeat an oval motion toward a front direction of one surface of the piezoelectric actuator 250 so that a friction part 132, which will be described later, can move in the direction of optical axis.

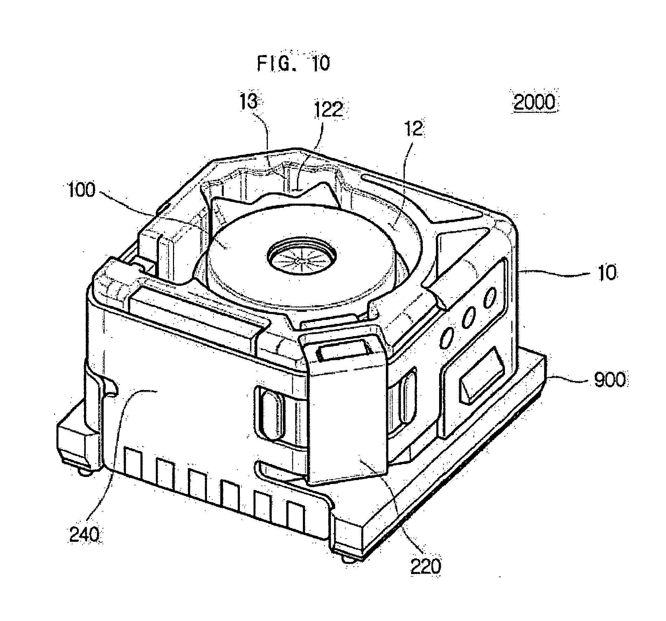

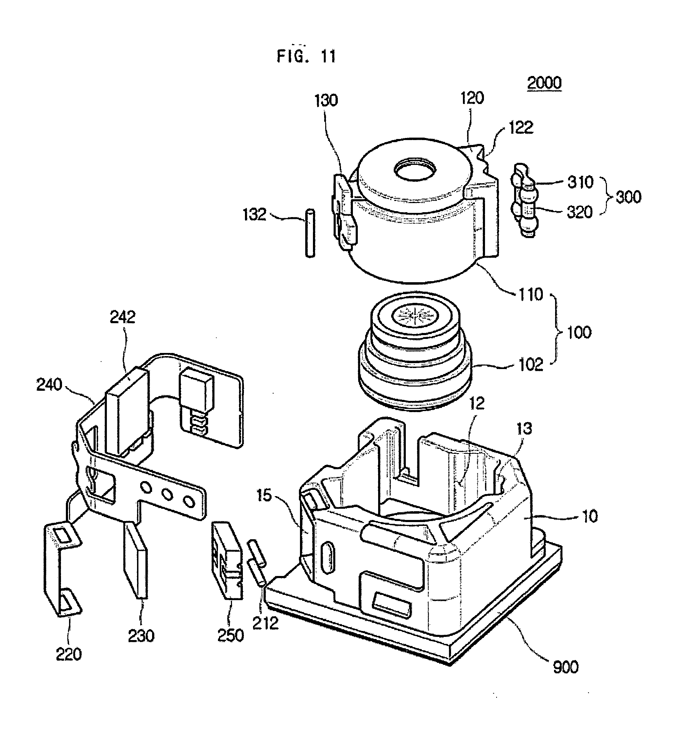

FIG 10 is a perspective view of a camera module 2000 in accordance with the second embodiment of the present invention, and FIG. 11 is an exploded perspective view of the camera module 2000 in accordance with the second embodiment of the present invention. As illustrated in FIGS. 10 and 11, the camera module 2000 of the present embodiment includes a lens unit 100, actuators 220, 230, 240, 250 and a board 900.

A housing 10 can provide a space in which components of the camera module 2000 can be received. Formed inside the housing 10 is a receiving part 12, in which the lens unit 100 is received. The receiving part 12 has the shape of a cylinder that is extended vertically according to the shape of the lens unit 100.

On one side of the receiving part 12, a bearing groove 13 is formed. The bearing groove 13 has the shape of a groove that is extended vertically so that a bearing part 300 can move vertically.

The bearing part 300, which allows an easy vertical movement of the lens unit 100, is interposed between the lens unit 100 and the housing 10. The bearing part 300 includes a maintaining part 310 and a supporting ball 320. The maintaining part 310 has the shape of a plate-type member and can rotatably support a plurality of the supporting balls 320.

One side of the lens unit 100 (more specifically, a barrel 110) is formed with a guide part 120. The guide part 120 guides the lens unit 100 to move vertically and has a traveling groove 122, along which the bearing part 300 travels, formed vertically on a rear surface thereof.

A supporting part 130 is formed on the other side of the barrel 110. The supporting part 130 supports a friction part 132. The friction part 132 comes in contact with the output protrusion and can be elevated by the oval motion of the output protrusion 212. With the elevation of the friction part 132, the lens unit 100 can adjust the distance from the image sensor and perform auto focusing.

The board 900 described earlier is coupled to a bottom surface of the housing 10.

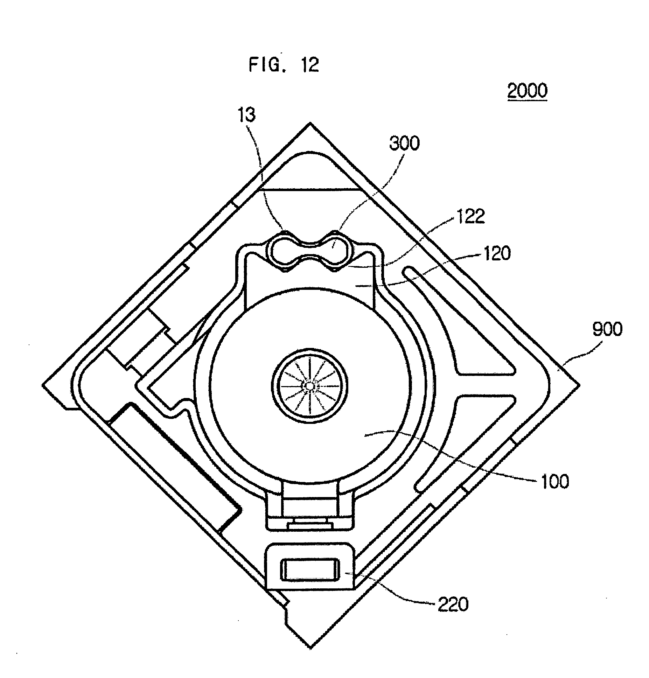

FIG. 12 is a top view of the camera module 2000 in accordance with the second embodiment of the present invention. As illustrated in FIG. 11 and FIG. 12, an insertion hole 15 is formed on the other side of the bearing groove 13 of the housing 10. The insertion hole 15 is where the actuator is coupled. The actuator is the part that moves the lens unit 100 in the direction of optical axis.

The actuator includes a piezoelectric actuator 250, shock-absorbing member 230, a preloading part 220 and a power connection member 240.

The piezoelectric actuator 250 has the same structure as described earlier, and is inserted in the insertion hole 15 in such a way that the output protrusion 212 is perpendicular to the friction part 132. Here, external electrodes 272, 274, 276 of the piezoelectric actuator 250 are exposed to the outside of the housing 10.

The preloading part 220 is coupled to the housing 10 so as to press the piezoelectric actuator 250 toward the friction part 132. The output protrusion 212 of the piezoelectric actuator 250 can be contacted with the friction part 132 by the preloading part 220. The shock-absorbing member 230 is interposed between the preloading part and the piezoelectric actuator 250.

The shock-absorbing member 230 absorbs the elastic force of the preloading part 220 so that the force exerted to the friction part 132 by the output protrusion 212 is constant. Moreover, the shock-absorbing member 230 can provide electrical connection to the piezoelectric actuator 250 because a predetermined location of a surface of the shock-absorbing member 230 facing the piezoelectric actuator 250 is made of a conductive material.

The power connection member 240 is a conductive plate-type member that is bent to surround the housing 10 toward the inside of the preloading part 220. Coupled to the inside of the power connection member 240 is a circuit member 242, which is for operating the camera module 2000.

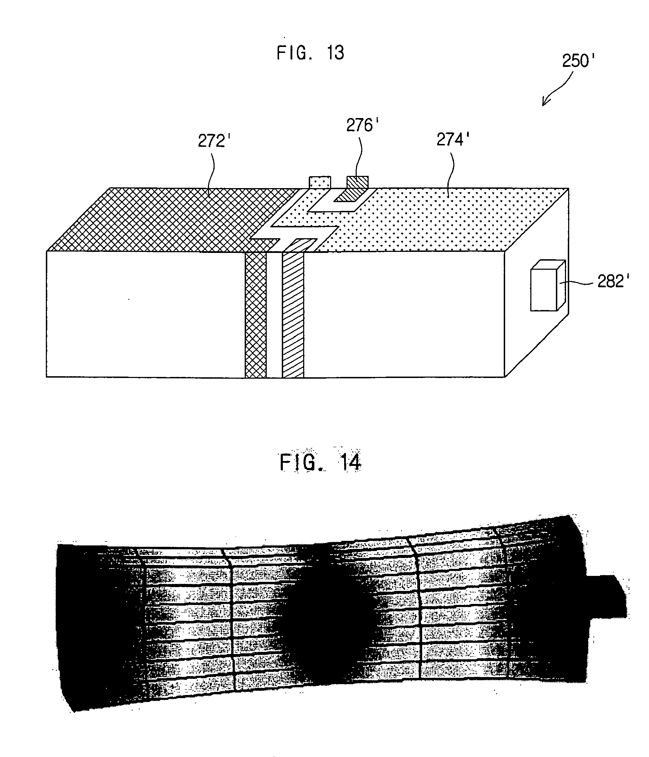

FIG. 13 is a perspective view illustrating a piezoelectric actuator of a camera module in accordance with a third embodiment of the present invention. As illustrated in FIG. 13, the piezoelectric actuator 250' of the present embodiment is extended lengthwise, and has an output protrusion 282' formed on one end in the extended direction thereof.

Formed on an upper surface of the piezoelectric actuator 250' are a first external electrode 272', a second external electrode 274' and a ground external electrode 276'. The first external electrode 272' and the second external electrode 274' divide the piezoelectric actuator 250' lengthwise, and the ground external electrode 276' is formed in between the external electrode 272' and the second external electrode 274'. The internal structure of the piezoelectric actuator 250' is identical to that of the piezoelectric actuator 250 of the earlier-described embodiment.

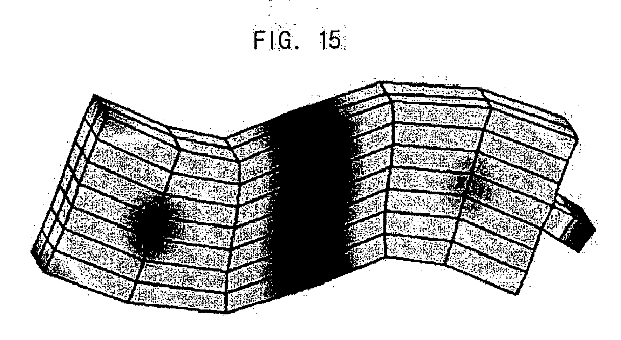

FIG. 14 illustrates an elastic mode of the piezoelectric actuator 250' of the camera module in accordance with the third embodiment of the present invention, and FIG. 15 is a bending mode of the piezoelectric actuator 250' of the camera module in accordance with the third embodiment of the present invention. As illustrated in FIG. 14, the piezoelectric actuator 250' can be expanded and contracted lengthwise when the piezoelectric actuator 250' is actuated (elastic mode). Here, the output protrusion 282' coupled to the end of the piezoelectric actuator 250' repeats forward and reverse motions in a direction that the piezoelectric actuator 250' is extended.

As illustrated in FIG. 15, the piezoelectric actuator 250' can be bent widthwise when the piezoelectric actuator 250' is actuated (bending mode). Here, the output protrusion 282' at the end of the piezoelectric actuator 250' repeats upward and downward motions.

In effect, when the piezoelectric actuator 250' is actuated, the elastic mode and the bending mode are combined to allow the output protrusion 282' to have oval motions in the direction that the piezoelectric actuator 250' is extended.

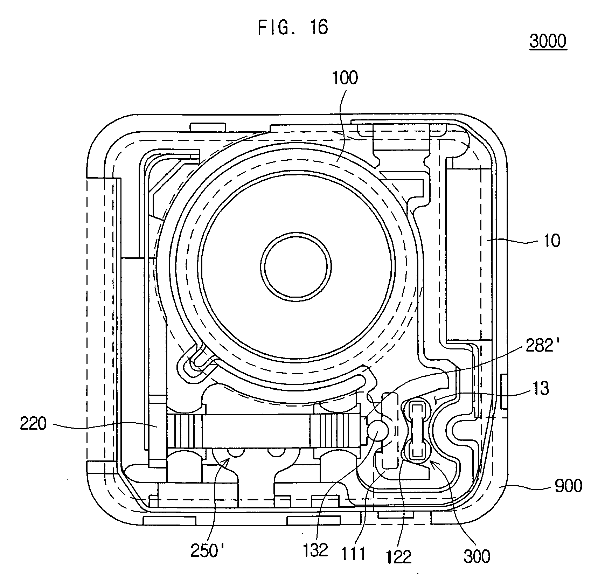

FIG. 16 is a top view of a camera module 3000 in accordance with the third embodiment of the present invention. As illustrated in FIG. 16, the camera module 3000 of the present embodiment includes a lens unit 100, actuators 220, 250' and a board 900.

The lens unit 100 generally has a cylindrical shape, and is formed with an actuating protrusion 111, of which a barrel is extended to one side of the lens unit 100. Formed on one surface of the actuating protrusion is a traveling groove 122. A bearing part 300 is formed in between the traveling groove 122 and the housing 10.

A friction part 132 is formed on the other surface of the actuating protrusion 111. The friction part 132 is coupled in a direction that the lens unit 100 is extended. In other words, the actuating protrusion 111 has a structure in which the above-described guide part 120 and supporting part 130 are integrated in the form of protrusion.

The actuator is coupled by facing the friction part 132.

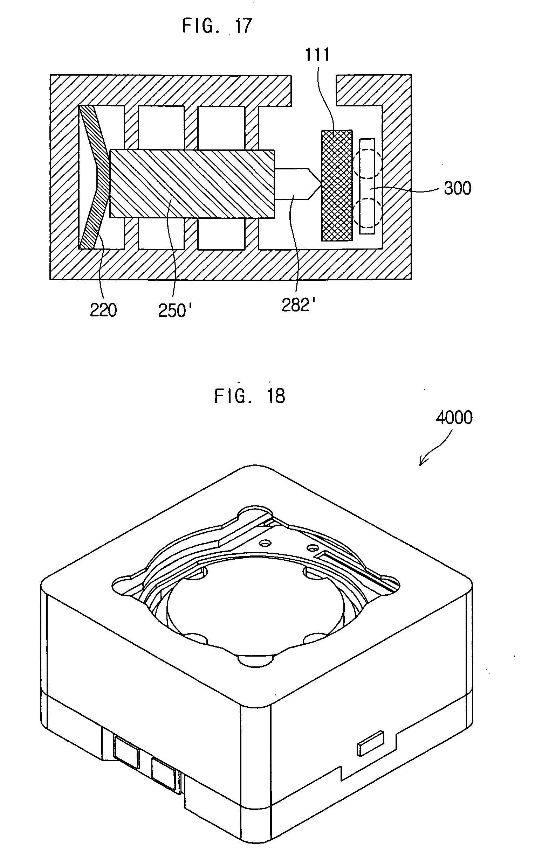

FIG. 17 illustrates operation of the camera module 3000 in accordance with the third embodiment of the present invention. The actuator includes a piezoelectric actuator 250' and a preloading part 220. The piezoelectric actuator 250' is arranged in such a way that the output protrusion 282' at one end thereof faces the actuating protrusion 111 (more specifically, in such a way that the output protrusion 282' faces the friction part 132).

The preloading part 220 is coupled to the other end of the piezoelectric actuator 250'. The preloading part 220 presses the piezoelectric actuator 250' toward the friction part 132 so that the output protrusion 282' and the friction part 132 maintain their contact. The preloading part 220 can be, for example, a plate-type member that its center part is protruded.

When the piezoelectric actuator 250' is actuated, the output protrusion 282' can repeat oval motions in a direction that the piezoelectric actuator 250' is extended, thereby elevating the friction part 132. As a result, the distance between the lens unit 100 and the image sensor changes, allowing the camera module 3000 to perform auto focusing.

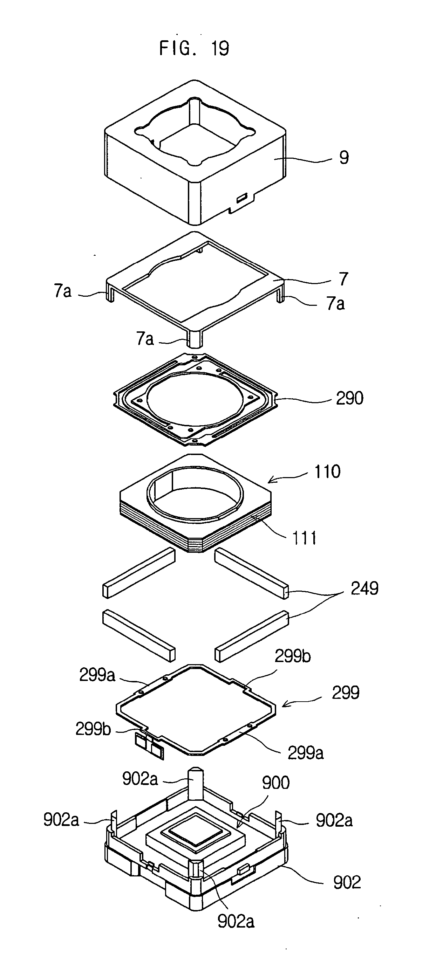

FIG. 18 is a perspective view of a camera module 4000 in accordance with a fourth embodiment of the present invention, and FIG 19 is an exploded perspective view of the camera module 4000 in accordance with the fourth embodiment of the present invention. As illustrated in FIGS. 18 and 19, the camera module 4000 of the present embodiment includes a lens unit 100, actuators 111, 249 and a board 900.

An upper side of the camera module 4000 is covered by a shield can 9, which protects components constituting the camera module 4000 from the outside. At the same time, the shield can 9 can be made of a conductive metal to shield the camera module 4000 from electromagnetic waves.

A holder 7 is coupled to a base 902 and provides a space in which the lens unit 100, elastic supporting parts 290, 299 and the actuators 111, 249 are coupled. The holder 7 generally has the shape of a square plate and has columns 7a, which are extended downward, formed at corners thereof. Formed inside the holder 7 is a hole to enable the lens unit 100 to move up and down.

The base 902 forms a bottom supporting structure of the camera module 4000. The board 900, to which an image sensor is coupled, is coupled to a lower surface of the base 902. The base 902 generally has the shape of a rectangle and has four columns 902, which are protruded upward, formed at corners thereof. The four columns 902 of the base 7 are coupled with the columns 7a of the holder 7.

The lens unit 100 includes a lens (not shown) and a barrel 110. An outer circumferential surface of the barrel 110 has the cross-sectional shape of a square, and an inner circumferential surface of the barrel 110 has the cross-sectional shape of a circle. The outer circumferential surfaces of the barrel 110 are formed with grooves along their perimeter, and a coil is wound along the grooves to form a coil part 111. Here, the barrel 110 in the above configuration can be referred to as a bobbin.

The actuator includes the coil part 111, a magnet part 249 and the elastic supporting parts 290, 299. The magnet part 240 is constituted by four magnets facing the coil part 111 outside the lens unit 100. The magnet part 249 is interposed between the holder 7 and the base 902.

The elastic supporting parts 290, 299 elastically support the lens unit 100 in the direction of optical axis of the lens. The elastic supporting parts 290, 299 includes a leaf spring part 290 and a film spring part 299.

The film spring part 299 elastically supports a lower side of the lens unit 100. The film spring part 299 has a square shape in accordance with the cross-sectional shape of the outer circumferential surface of the lens unit 100. Two facing sides 299a of the film spring part 299 are supported by the base 902, and the remaining two facing sides 299b can support a lower end of the lens unit 100.

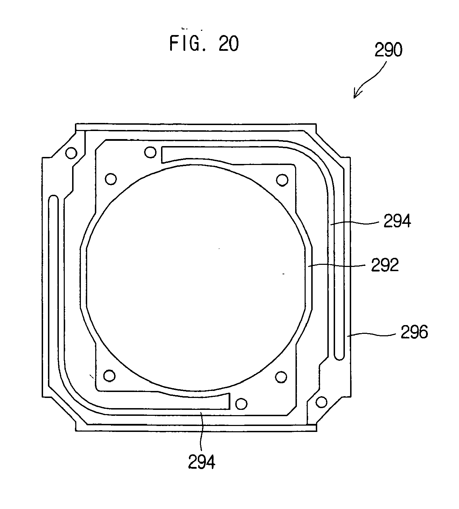

FIG. 20 is a top view of the leaf spring part 290 of the camera module 4000 in accordance with the fourth embodiment of the present invention. The leaf spring part 290 is coupled to an upper side of the barrel 110 and can elastically support the lens unit 100. As illustrated in FIG. 20, the leaf spring part 290 includes a first frame 292, an elastic plate 294 and a second frame 296. The first frame 292 is coupled to the upper side of the lens unit 100 and has a circular shape like the cross-sectional shape of an inner circumferential shape of the lens unit 100. The elastic plate 294 is coupled to an outer side of the first frame 292. There can be, for example, two elastic plates 294.

The two elastic plates 294 are spirally extended outwardly from two facing locations of the first frame 292. The second frame 296 has the cross-sectional shape of a square in accordance with the cross-sectional shape of the holder 7, and accordingly, the elastic plate294 is bent perpendicularly. The two elastic plates 294 are coupled the second frame 296 at locations corresponding to where the elastic plates 294 are connected with the first frame 292.

Therefore, the leaf spring part 290 can elastically support the lens unit 100 by the two elastic plates 294 that are symmetrically arranged in between the first frame 292 and the second frame 296. Here, due to the symmetrical structure of the leaf spring part 290, the lens unit 100 can be supported with a same elastic force in all directions.

Once electric current is supplied to the coil part 111, the lens unit 100 is repositioned by attraction or repulsion between the coil part 111 and the magnet part 249 and by the elastic force between the elastic supporting parts. The distance between the lens unit 100 and the image sensor is adjusted by the operation of the actuator, allowing the camera module of the present embodiment perform auto focusing.

Although some embodiments of the present invention have been described, it shall be appreciated that there can be a very large number of permutations and modification of the present invention by those who are ordinarily skilled in the art to which the present invention pertains without departing from the technical ideas and boundaries of the present invention, which shall be defined by the claims appended below.

It shall be also appreciated that many other embodiments other than the embodiments described above are included in the claims of the present invention.

## Claims

1. A camera module comprising:
a lens unit including a lens and a barrel supporting the lens;
an actuator configured to move the lens unit in a direction of optical axis; and
an image sensor configured to convert an image incident through the lens unit to an electrical signal and have an extended depth of field.

2. The camera module of claim 1, wherein the actuator auto focuses a photographed target object at a distance of 100mm to 1000mm.

3. The camera module of claim 1, further comprising a printed circuit board that is packaged with the image sensor.

4. The camera module of claim 1, wherein the actuator comprises:
a piezoelectric actuator, of which one end is in contact with one side of the barrel; and
a preloading part configured to press the other end of the piezoelectric actuator.

5. The camera module of claim 4, wherein the piezoelectric actuator repeats deformation in which expanding and contracting are combined with bending so as to elevate the barrel.

6. The camera module of claim 5, wherein a first output protrusion is formed on one surface of the piezoelectric actuator that faces the barrel.

7. The camera module of claim 6, wherein the piezoelectric actuator is extended in a direction that is perpendicular to a direction of optical axis of the lens unit.

8. The camera module of claim 8, wherein a friction part is formed on one side of the barrel, the friction part being arranged in the direction of optical axis, and
wherein a plurality of second output protrusions are formed on one surface of the piezoelectric actuator, the second output protrusions being coupled perpendicularly to the direction of optical axis.

9. The camera module of claim 4, further comprising a bearing part being arranged to face the piezoelectric actuator and configured to movably support the barrel in the direction of optical axis.

10. The camera module of claim 9, wherein the bearing part comprises:
a maintaining part; and
a supporting ball being rotatably coupled to the maintaining part and configured to movably support the barrel.

11. The camera module of claim 10, wherein a traveling groove is formed on an outer circumferential surface of the barrel, the traveling groove being formed in the direction of optical axis so that the supporting ball can travel.

12. The camera module of claim 1, wherein the actuator comprises:
a coil part being wound on an outer circumferential surface of the barrel;
a magnet part facing the coil part; and
an elastic supporting part configured to elastically support the barrel in the direction of optical axis of the lens unit.

13. The camera module of claim 12, wherein the elastic supporting part comprises:
a leaf spring part configured to support an upper side of the barrel; and
a film spring part configured to support a lower side of the barrel.

14. The camera module of claim 13, wherein the leaf spring part comprises:
a first frame being coupled to the upper side of the barrel;
a plurality of symmetrical elastic plates spirally extended to an outside of the first frame about the barrel; and
a second frame being coupled to the plurality of elastic plates.
